Europäisches Patentamt

(19) European Patent Office

Office européen des brevets

(11) Veröffentlichungsnummer: **0 026 264**
**B1**

(12) **EUROPÄISCHE PATENTSCHRIFT**

(45) Veröffentlichungstag der Patentschrift:
15.02.84

(21) Anmeldenummer: 80103621.1

(22) Anmeldetag: 26.06.80

(51) Int. Cl.³: **B 29 C 27/02**

(54) Vorrichtung zum Verschweissen von Gegenständen aus Thermoplasten.

(30) Priorität: 20.08.79 DE 2933650

(43) Veröffentlichungstag der Anmeldung:
08.04.81 Patentblatt 81/14

(45) Bekanntmachung des Hinweises auf die Patenterteilung:
15.02.84 Patentblatt 84/7

(84) Benannte Vertragsstaaten:
AT BE CH FR IT LI NL SE

(56) Entgegenhaltungen:
DE - A - 2 544 492
DE - A - 2 626 560
DE - U - 6 945 152
DE - U - 7 815 981

(73) Patentinhaber: MESSER GRIESHEIM GMBH, Hanauer
Landstrasse 330, D-6000 Frankfurt/Main 1 (DE)

(72) Erfinder: Bemelmann, Karl, Kronbergerstrasse 19,
D-6232 Bad Soden (DE)
Erfinder: Koch, Hubert, Neugasse 5,
D-6367 Karben 3 (DE)
Erfinder: Jablonski, Norbert, Löwenseestrasse 1,
D-6457 Maintal 2 (DE)
Erfinder: Lenck, Siegfried, Dürkheimerstrasse 37,
D-6230 Frankfurt/M. 80 (DE)

## Vorrichtung zum Verschweissen von Gegenständen aus Thermoplasten

Die vorliegende Erfindung betrifft eine Vorrichtung zum Verschweissen von Gegenständen aus Thermoplasten mittels eines Zusatzwerkstoffes, mit einer Vorschubeinrichtung für den Zusatzwerkstoff, einer sich daran anschliessenden Heizkammer, in deren Innern ein Schmelzkanal zur Plastifizierung des Zusatzwerkstoffes angeordnet ist.

Eine derartige Vorrichtung ist bereits aus der DE-OS 2 544 492 als bekannt zu entnehmen. Bei dieser Vorrichtung ist ein verhältnismässig grosser Kraftaufwand derVorschubeinrichtung für den Transport des Zusatzwerkstoffes innerhalb der Heizkammer erforderlich. Darüber hinaus besteht immer wieder die Gefahr, dass nicht ausreichend plastifizierter Zusatzwerkstoff aus der Vorrichtung austritt, was schlechte Schweissverbindungen zur Folge haben kann.

Aufgabe der vorliegenden Erfindung ist es daher, die Vorrichtung so zu gestalten, dass eine durchgehende Plastifizierung des Zusatzwerkstoffes gewährleistet ist.

Zur Lösung der genannten Aufgabe wird gemäss der Erfindung vorgeschlagen, dass der Schmelzkanal aus mehreren, parallel verlaufenden und untereinander verbundenen Bohrungen besteht und dass am Austritt des Schmelzkanals ein als Drossel wirkender Lochkörper vorgesehen ist, derart, dass der Zusatzwerkstoff so lange im Schmelzkanal verbleibt, bis eine durchgehende Plastifizierung erreicht ist.

Hierbei ist es dann von besonderem Vorteil, wenn die Längsbohrungen auf einem Bohrungskreis vorgesehen und so einander zugeordnet sind, dass sie mit einer gemeinsamen Zentralbohrung zur Bildung des Schmelzkanals verbunden sind.

Weitere erfindungsgemässe Vorteile ergeben sich aus den übrigen Unteransprüchen.

Durch die erfindungsgemässe Anordnung eines als Drossel wirkenden Lochkörpers in Verbindung mit der besonderen Gestaltung des Schmelzkanals wird in vorteilhafter Weise ein durchgehend erwärmter, plastifizierter Zusatzwerkstoff erhalten. Durch die den Schmelzkanal bildenden und untereinander verbundenen Bohrungen wird somit, auf Grund der dadurch sich ergebenden grösseren Schmelzkanalfläche eine erhöhte Wärmemenge an den Zusatzwerkstoff, zu dessen vollständiger Plastifizierung innerhalb des Schmelzkanals abgegeben. Durch den am austrittsseitigen Ende des Schmelzkanals vorgesehenen Lochkörper erfolgt eine kurzzeitige Aufteilung des Zusatzwerkstoffes in einzelne «Stränge», die sich aber sofort wieder zu einem gemeinsamen Strang vermischen. Der Lochkörper bewirkt somit in vorteilhafter Weise neben seiner Funktion als Drossel auch eine ausgezeichnete Vermischung des Zusatzwerkstoffes, so dass dieser in dem für die Kunststoff-Schweissung optimalen Zustand in die Schweissfuge eintreten kann.

Weitere Vorteile ergeben sich aus der nachstehenden Beschreibung einer bevorzugten Ausführungsform der Erfindung in Verbindung mit der beigefügten Zeichnung, in der dargestellt sind, in

Fig. 1 eine schematische Teilansicht einer Kunststoff-Schweissvorrichtung;

Fig. 2 einen Längsschnitt durch die Heizkammer;

Fig. 3 die Anordnung des Lochkörpers am Ende der Heizkammer;

Fig. 4 eine Schnittansicht entlang der Linie IV–IV in Fig. 2 in vergrössertem Massstab;

Fig. 5 eine obere Endansicht der Heizkammer gemäss Fig. 2;

Fig. 6 eine untere Endansicht der Heizkammer ohne Lochkörper;

Fig. 7 eine vergrösserte Schnittansicht des Lochkörpers;

Fig. 8 eine Endansicht des Lochkörpers aus Fig. 7 und

Fig. 9 eine Projektion des Schmelzkanals auf dem Lochkörper.

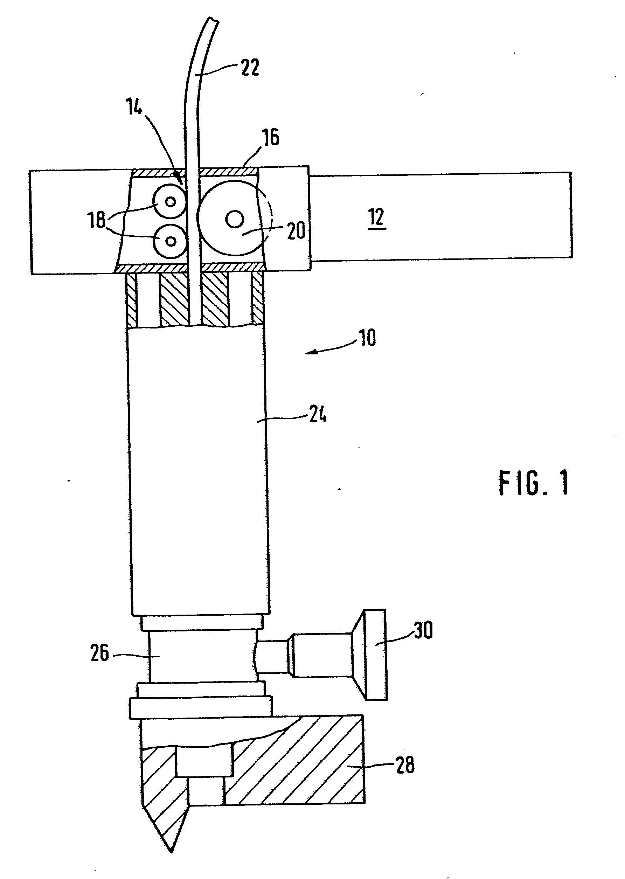

Die in Fig. 1 schematisch dargestellte Kunststoff-Schweissvorrichtung 10 weist einen Handgriff 12 auf, an dem ein die Vorschubeinrichtung 14 aufnehmender Kopf 16 angeordnet ist. Die Vorschubeinrichtung 14 besteht aus Führungs- und Antriebsrollen 18 bzw. 20, mittels denen der Kunststoff-Schweissdraht (= Zusatzwerkstoff) 22 in Richtung zur sich anschliessenden Heizkammer 24 vorwärtsbewegt wird. Der Antrieb der Vorschubeinrichtung 14 erfolgt über einen (nicht dargestellten) im Handgriff 12 untergebrachtem Getriebemotor. An dem in Fig. 1 unteren Ende der Heizkammer 24 ist ein Schweissschuhhalter 26 mit Schweissschuh 28 angeordnet, aus dem (28) der in der Heizkammer 24 plastifizierte Zusatzwerkstoff 22 in Form eines Stranges austritt. Die Temperatur des Stranges wird über ein Thermometer 30 kontrolliert.

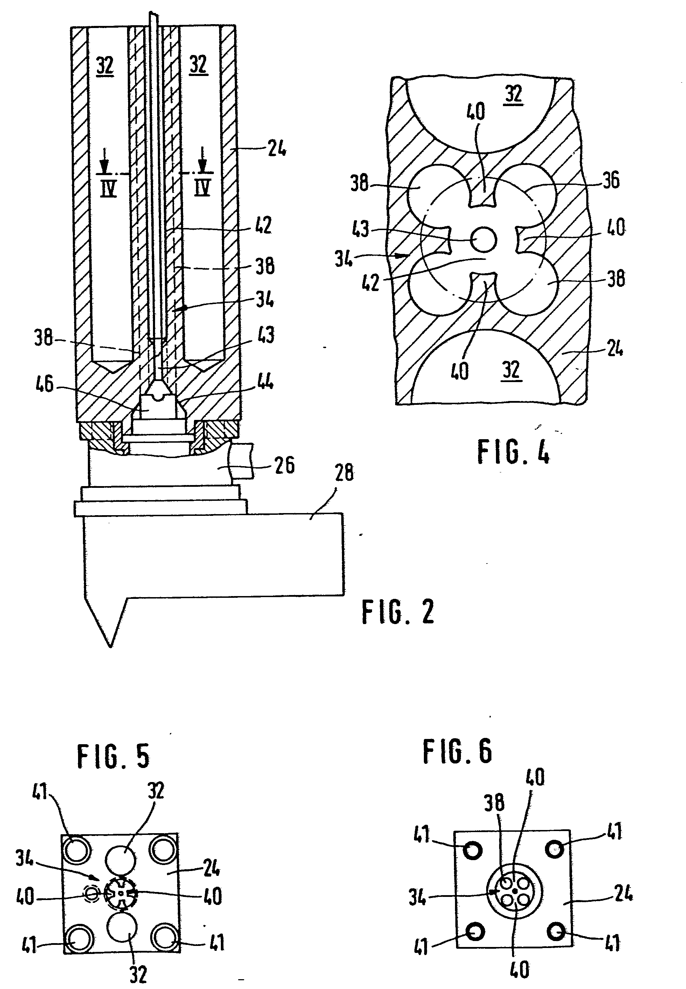

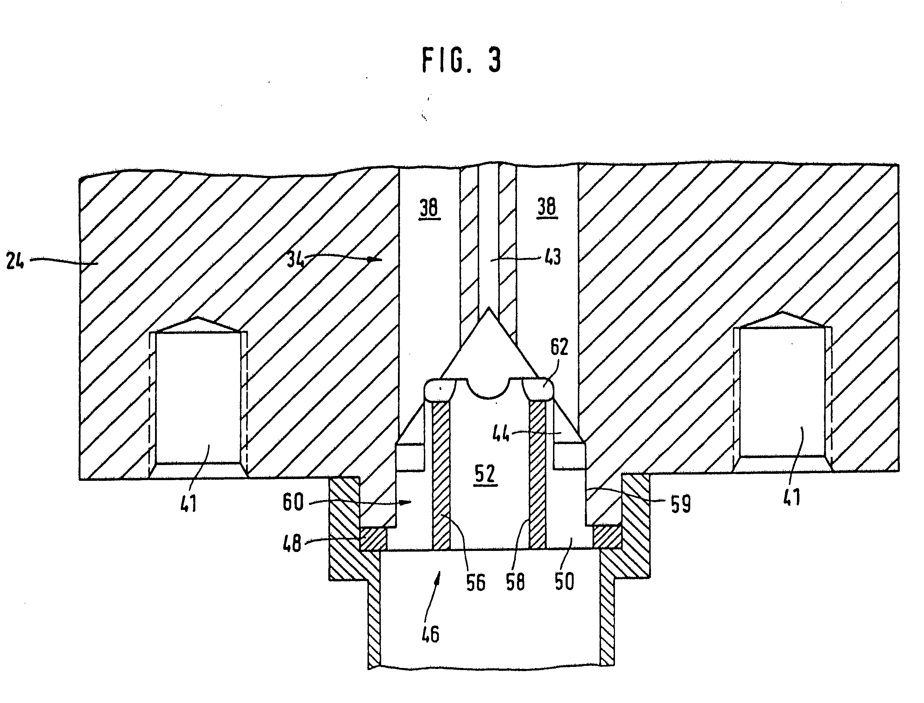

In den Fig. 2–6 ist die Heizkammer 24 in mehreren Ansichten dargestellt. Wie ersichtlich, besteht die Heizkammer 24 aus einem quaderförmigen Block, in dessen Innern zwei einander diametral gegenüberliegende Langlöcher 32 vorgesehen sind, welche zur Aufnahme der (nicht gezeichneten) Heizpatronen für die Plastifizierung des Zusatzwerkstoffes dienen.

Wie die Fig. 2 und 5 zeigen, ist zwischen den beiden Langlöchern 32 zentrisch ein Schmelzkanal 34 zur Führung des Zusatzwerkstoffes 22 vorgesehen. Dieser Schmelzkanal 34 hat im Querschnitt, vgl. hierzu Fig. 4, eine kleeblattförmige Form. Diese Gestalt wird erhalten durch – im Ausführungsbeispiel – vier parallel verlaufende und auf einem gemeinsamen Bohrungskreis 36 angeordnete Längsbohrungen 38, die durch Zwischenstege 40 voneinander getrennt aber in einer gemeinsamen, längsverlaufenden Zentralbohrung 42 zur Bildung des Schmelzkanals 34 münden. Durch diese Zentralbohrung 42 wird mittels der Vorschubeinrichtung 14 – wie dies später noch näher erläutert wird – der Zusatzwerkstoff 22 (in Fig. 2 von oben nach unten) gefördert. Die Zentralbohrung hat, wie Fig. 2 zeigt, an ihrem unteren Ende eine Verjüngung 43.

Die an den Endseiten der Heizkammer 24 vorhandenen Gewindebohrungen 41 dienen zur Aufnahme von Schraubverbindungen, mittels derer die Heizkammer 24 mit dem Kopf 16 (Fig. 5) bzw. dem Schweissschuhhalter 26 (Fig. 6) verbunden wird.

Es ist selbstverständlich, dass anstelle der «vierblättrigen Kleeblattform» des Schmelzkanals 34 dieser auch erfindungsgemäss in einer anderen Querschnittsform gestaltet sein kann, z.B. mit drei oder sechs Längsbohrungen 38 oder ähnlichem.

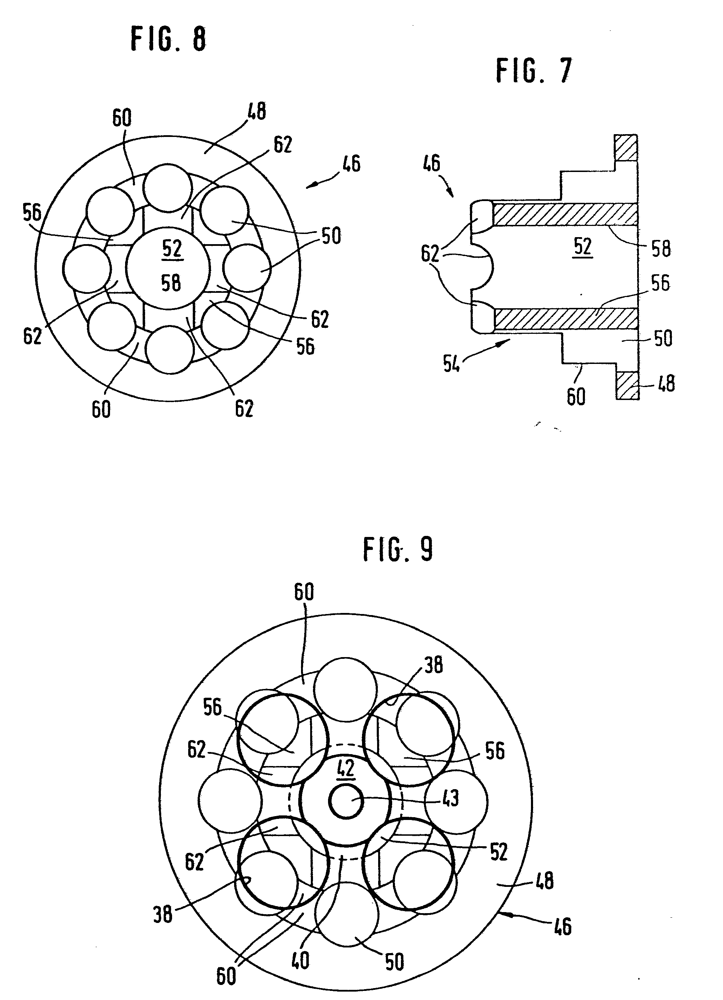

Wie Fig. 2 und vergrössert Fig. 3 zeigen, weist das untere Ende des Schmelzkanals 34 einen Austritt 44 auf, welcher konisch gestaltet ist und zur Aufnahme eines erfindungsgemässen Lochkörpers 46 dient. Dieser Lochkörper ist als Einzelheit in den Fig. 7 und 8 dargestellt.

Der Lochkörper 46 besteht aus einer kreisrunden Grundplatte 48 mit auf einem gemeinsamen Teilkreis angeordneten Randbohrung 50. Zwischen diesen Randbohrungen und der Mittelbohrung 52 sind Stege 54 ausgebildet. Die Stege 54 sind, wie insbesondere Fig. 7 zeigt, zweistufig, wobei die innere (längere) Steggruppe 56 eine Wandung 58 für die Mittelbohrung 52 und die äussere (kleinere) Steggruppe 60 in Verbindung mit der inneren Steggruppe 56 eine kanalförmige, halbseitig geschlossene Verlängerung der Randbohrungen 50 bildet.

Am oberen (in Fig. 7 linken) Ende der inneren Steggruppe 56 sind Einfräsungen 62 vorgesehen, in die im eingebauten Zustand des Lochkörpers 46 die Zwischenstege 40 eingreifen. Durch diese gegenseitige Anordnung der Zwischenstege 40 bezüglich der Einfräsungen 62 ist der Lochkörper 46 in seiner Einbaulage positioniert.

Wie insbesondere Fig. 3 zeigt, ist der Lochkörper 46 so im Austritt 44 des Schmelzkanals 34 angeordnet, dass die Grundplatte 48 am unteren Stirnende der Heizkammer 24 anliegt und weiterhin die äussere Steggruppe 60 dichtend von einer zylindrischen Wandung 59 (des Austrittes 44) aufgenommen ist. Auf diese Weise ist sichergestellt, dass der plastifizierte Zusatzwerkstoff durch die Randbohrungen 50 fliesst.

Die erfindungsgemässe Anordnung des Lochkörpers 46 in bezug auf den Schmelzkanal 34 lässt sich am besten anhand der Fig. 9 erläutern, in welcher die Kontur des Schmelzkanals 34 mit dicken Vollinien, die Gestalt des Lochkörpers der Übersicht halber mit dünnen Vollinien dargestellt ist.

Am unteren Ende des Schmelzkanals geht die Zentralbohrung 42 in die Verjüngung 43 über, die ihrerseits in die Mittelbohrung 52 des Lochkörpers 46 mündet. Ab der Verjüngung 43 sind die Längsbohrungen nun nicht mehr mit der Zentralbohrung 42 verbunden, sondern enden als einzelne separate Bohrungen, die durch die Zwischenstege 40 weiterhin voneinander getrennt sind, vgl. hierzu auch Fig. 6.

Der Lochkörper 46 ist nun so um Austritt 44 angeordnet, dass die Einfräsungen 62 der inneren Steggruppe 56 mit den Zwischenstegen 40 ausgerichtet sind. Wie aus Fig. 9 ersichtlich, stehen somit die Längsbohrungen 38 oberhalb der inneren Steggruppen 56 als auch zum Teil über den äusseren Randbohrungen 50 des Lochkörpers, so dass der Zusatzwerkstoff aus diesen Längsbohrungen in Richtung Lochkörper fliessen kann.

Beim Betrieb der Vorrichtung wird nun mittels der Vorschubeinrichtung 14 der drahtförmige Zusatzwerkstoff durch den Schmelzkanal 34 geschoben und tritt dann in plastifizierter Form aus dem Schweissschuh 28 aus. Der Zusatzwerkstoff bewegt sich dabei im Bereich der Zentralbohrung 42 des Schmelzkanals, bei deren Druckwanderung er erwärmt und dadurch plastifiziert wird. Der durch die Erwärmung fliessfähige Zusatzwerkstoff gelangt über die Verjüngung 43 am unteren Ende der Zentralbohrung 42 und über die Mittelbohrung 52 des Lochkörpers 46 in den Schweissschuh 28. Dieser Ablauf wäre an sich der Idealfall. Die Praxis zeigt jedoch, dass ein Teil des drahtförmigen Zusatzwerkstoffes nicht oder nicht ausreichend plastifiziert wird. Durch die Verjüngung 43 kann – wie erwähnt – nur plastifizierter Zusatzwerkstoff fliessen. Der nicht plastifizierte Teil hingegen staut sich in der Zentralbohrung 42 und wird – da ja weiterhin Zusatzwerkstoff nachgeschoben wird – nach allen Seiten hin ausgelenkt (vergleichsweise wie eine nach allen Seiten schwingende Schnur) und gelangt dabei in die mit der Zentralbohrung 42 verbundenen Längsbohrungen 38, in denen der noch kalte Zusatzwerkstoff ebenfalls erwärmt wird. Aufgrund der Ablenkung des drahtförmigen Zusatzwerkstoffes in alle Längsbohrungen ist somit eine kontinuierliche Vorschubbewegung sichergestellt, ohne dass dabei trotz einer hohen Ausbringungsrate an plastifiziertem Zusatzwerkstoff, ein erhöhter Kraftaufwand an der Vorschubeinrichtung 14 erforderlich wird.

Wie Fig. 9 zeigt, setzt die Steggruppe 56 und in Verbindung mit den ihrem Durchmesser kleineren Randbohrungen 50 dem aus dem Längsbohrungen 38 entweichenden Zusatzwerkstoff einen Strömungswiderstand entgegen, dergestalt, dass dadurch gewährleistet ist, dass nur durchgehend erwärmter und damit völlig plastifizierter Zusatzwerkstoff diesen als «Drossel» wirkenden Lochkörper überwinden kann.

Der auf diese erfindungsgemässe Weise durchgehend plastifizierte Zusatzwerkstoff fliesst nunmehr durch die Bohrungen 50, 52 des Lochkörpers 46 und wird dadurch kurzfristig in einzelne Stränge aufgeteilt, die aber nach Austreten aus den Bohrungen sofort wieder expandieren und sich zu einem gemeinsamen, durchgehend plastifizierten Strang vereinen, der dann über den Schweissschuh austritt.

## Patentansprüche

1. Vorrichtung zum Verschweissen von Gegenständen aus Thermoplasten mittels eines Zusatzwerkstoffes, mit einer Vorschubeinrichtung für den Zusatzwerkstoff, einer sich daran anschliessenden Heizkammer, in deren Innern ein Schmelzkanal zur Plastifizierung des Zusatzwerkstoffes angeordnet ist, dadurch gekennzeichnet, dass der Schmelzkanal (34) aus mehreren, parallel verlaufenden und untereinander verbundenen Bohrungen (38, 42) besteht und dass am Austritt (44) des Schmelzkanals (34) ein als Drossel wirkender Lochkörper (46) vorgesehen ist, derart, dass der Zusatzwerkstoff (22) so lange im Schmelzkanal (34) verbleibt, bis eine durchgehende Plastifizierung erreicht ist.

2. Vorrichtung nach Anspruch 1, dadurch gekennzeichnet, dass die Längsbohrungen (38) auf einem Bohrungskreis (36) vorgesehen und so einander zugeordnet sind, dass sie mit einer gemeinsamen Zentralbohrung (42) zur Bildung des Schmelzkanals (34) verbunden sind.

3. Vorrichtung nach einem der voranstehenden Ansprüche, dadurch gekennzeichnet, dass die Zentralbohrung (42) in einer Verjüngung (43) endet, welche nicht mehr mit den einzelnen Längsbohrungen (38) verbunden ist, und dass die Längsbohrungen (38) separat im Austritt (44) des Schmelzkanals (34) münden.

4. Vorrichtung nach einem der voranstehenden Ansprüche, dadurch gekennzeichnet, dass der am Austritt (44) angeordnete Lochkörper (46) von einem sich anschliessenden und an der Heizkammer (24) befestigten Heizschuhhalter (26) in seiner Position gehalten ist.

5. Vorrichtung nach einem der voranstehenden Ansprüche, dadurch gekennzeichnet, dass der Lochkörper (46) aus einer kreisrunden Lochplatte (48) mit davon abstehenden Stegen (56, 60) besteht und weiterhin eine Mittelbohrung (52) und diese umgebende Randbohrungen (50) aufweist.

6. Vorrichtung nach einem der voranstehenden Ansprüche, dadurch gekennzeichnet, dass die Stege zweistufig ausgebildet sind, wobei die innere Steggruppe (56) eine gemeinsame Wandung (58) für die Mittelbohrung (52) und die äussere, kleinere Steggruppe (60) in Verbindung mit der inneren Steggruppe (56) eine kanalförmige, halbseitig geschlossene Verlängerung der Randbohrungen (50) bildet.

7. Vorrichtung nach einem der voranstehenden Ansprüche, dadurch gekennzeichnet, dass die äussere Steggruppe (60) des Lochkörpers (46) dichtend an der Wandung (59) des Austrittes (44) anliegt.

8. Vorrichtung nach einem der voranstehenden Ansprüche, dadurch gekennzeichnet, dass die gegenseitige Anordnung von Schmelzkanal (34) und Lochkörper (46) derart ist, dass die Zwischenstege (40) des Schmelzkanals (34) und die Einfräsungen (62) der inneren Steggruppe (56) des Lochkörpers (46) zueinander ausgerichtet sind.

9. Vorrichtung nach einem der voranstehenden Ansprüche, dadurch gekennzeichnet, dass die Längsbohrungen (38) der inneren Steggruppe (56) gegenüberliegend angeordnet sind und mit den Bohrungen (50) des Lochkörpers (46) in Verbindung

## Claims

1. Apparatus for welding thermoplastic articles by means of a filler material, with an advancing facility for the filler material, an adjoining heating chamber in the internal part of which a melting channel is arranged for the plasticizing of the filler material, characterized in that the melting channel (34) consists of several bores (38, 42) running in parallel and being connected with each other and that at the outlet (44) of the melting channel (34) a hole body (46) is provided which acts as throttle such that the filler material (22) remains so long in the melting channel (34) until a continuous plasticizing is achieved.

2. Apparatus according to claim 1, characterized in that the longitudinal bores (38) are provided on a bore circle (36) and are allocated to another such that they are connected with a common central bore (42) to form the melting channel (34).

3. Apparatus according to one of the previous claims, characterized in that the central bore (42) ends in a taper (43) which is not connected to the individual longitudinal bores (38) and that the longitudinal bores (38) end separately in the outlet (44) of the melting channel (34).

4. Apparatus according to one of the previous claims, characterized in that the hole body (46) which is arranged at the outlet (44) is maintained in its position by a heating shoe support (26) which is adjoining and attached to the heating chamber (24).

5. Apparatus according to one of the previous claims, characterized in that the hole body (46) consists of a round hole plate (48) with spacers (56, 60) which protrude from there and furthermore has a centre bore (52) and marginal bores (50) which surround the latter.

6. Apparatus according to one of the previous claims, characterized in that the spacers are of two-stage design whereby the inner spacer group (56) forms a common wall (58) for the middle bore (52), and the outer, smaller spacer group (60) in connection with the inner spacer group (56) forms a channel shaped extension of the marginal bores (50) which is closed on half a side.

7. Apparatus according to one of the previous claims, characterized in that the outer spacer group (60) of the hole body (46) rests against the wall (59) of the outlet (44) having a sealing effect.

8. Apparatus according to one of the previous claims, characterized in that the mutual arrangement of the melting channel (34) and hole body (46) is effected such that the intermediate spacers (40) of the melting channel (34) and the milled surfaces (62) of the inner spacer group (56) of the hole body (46) are aligned facing each other.

9. Apparatus according to one of the previous claims, characterized in that the longitudinal bores (38) of the inner spacer group (56) are arranged such that they are located opposite and are connected to the bores (50) of the hole body (46).

## Revendications

1. Dispositif pour souder des objets en matière thermoplastique à l'aide d'une matière additive, comportant une installation d'avance pour la matière additive, une chambre de chauffage adjacente à celle-ci dans laquelle il est prévu un canal de fusion pour plastifier la matière additive, caractérisé en ce que le canal de fusion (34) se compose de plusieurs perçages parallèles et reliés entre eux (38, 42) et en ce qu'à la sortie (44) du canal de fusion (34) il est prévu un organe à trous (46) fonctionnant comme organe d'étranglement de façon que la matière additive (22) séjourne dans le canal de fusion (34) jusqu' à ce qu'elle ait atteint un état plastique dans toute son épaisseur.

2. Dispositif selon la revendication 1, caractérisé en ce que les perçages longitudinaux (38) sont répartis sur un cercle primitif (36) et sont prévus les uns par rapport aux autres de façon à être reliés à un perçage central (42) commun, pour former un canal de fusion (34).

3. Dispositif selon l'une des revendications précédentes, caractérisé en ce que le perçage central (42) débouche dans un rétrécissement (43) qui n'est plus relié aux différents perçages longitudinaux (38) et en ce que les perçages longitudinaux (38) débouchent séparément dans la sortie (44) du canal de fusion (34).

4. Dispositif selon l'une des revendications précédentes, caractérisé en ce que l'organe à trous (46) révu à la sortie (44) est maintenu en position par un support de patin de chauffage (26) adjacent à celui-ci et fixé à la chambre de chauffage (24).

5. Dispositif selon l'une des revendications précédentes, caractérisé en ce que l'organe à trous (46) se compose d'une plaque à trous (48) circulaire avec des cloisons en saillie (56, 607) et comporte en outre un perçage central (52) et des perçages périphériques (50) entourant celui-ci.

6. Dispositif selon l'une des revendications précédentes, caractérisé en ce que les cloisons sont à deux niveaux et le groupe de cloisons intérieur (56) présente une paroi commune (58) pour le perçage central (52) et le groupe d'entretoises (60) extérieur, plus petit, forment en combinaison avec le groupe d'entretoises (56) intérieur, un prolongement en forme de canal fermé sur un demi côté pour les perçages périphériques (50).

7. Dispositif selon l'une des revendications précédentes, caractérisé en ce que le groupe d'entretoises (60) extérieur de l'organe à trous (46) est appliqué de façon étanche contre la paroi (59) de la sortie (44).

8. Dispositif selon l'une des revendications précédentes, caractérisé en ce que la disposition réciproque du canal de fusion (34) et de l'organe à trous (46) est tel que les cloisons intermédiaires (40) du canal de fusion (34) et les fraisages (62) du groupe d'entretoises (56) intérieur de l'organe à trous (46) soient alignés entre eux.

9. Dispositif selon l'une des revendications précédentes, caractérisé en ce que les perçages longitudinaux (38) du groupe d'entretoises (56) intérieur sont prévus en regard les uns des autres et communiquent avec les perçages (50) de l'organe à trous (46).

FIG. 1

FIG. 2

FIG. 4

FIG. 5

FIG. 6

# FIG. 3

0 026 264

FIG. 8

FIG. 7

FIG. 9